# EUROPEAN PATENT SPECIFICATION

(11) **EP 4 465 172 B1**
(45) Date of publication and mention of the grant of the patent: **06.05.2026**
(21) Application number: 24159701.2
(22) Date of filing: 26.02.2024
(51) Int. Cl.: G06F 9/451, G06T 1/20, G06T 15/00, G06T 15/80, G09G 5/36

(54) **METHOD FOR PERFORMING AUTOMATIC ACTIVATION CONTROL REGARDING VARIABLE RATE SHADING, AND ASSOCIATED APPARATUS**
VERFAHREN ZUR DURCHFÜHRUNG EINER AUTOMATISCHEN AKTIVIERUNGSSTEUERUNG IN BEZUG AUF SCHATTIERUNG MIT VARIABLER RATE UND ZUGEHÖRIGE VORRICHTUNG
PROCÉDÉ DE RÉALISATION D'UNE COMMANDE D'ACTIVATION AUTOMATIQUE CONCERNANT UN OMBRAGE À DÉBIT VARIABLE, ET APPAREIL ASSOCIÉ

(30) Priority: 19.05.2023 US 202363503175 P; 22.02.2024 US 202418583884
(43) Date of publication of application: 20.11.2024
(73) Proprietor: MEDIATEK INC., Hsin-Chu 300 (TW)
(72) Inventor: HUANG, Po-Yu, Hsinchu City, TW 30078 (TW); LIN, Shih-Chin, Hsinchu City, TW 30078 (TW); TSAI, Ching-Yi, Hsinchu City, TW 30078 (TW); TSAO, You-Ming, Hsinchu City, TW 30078 (TW)
(74) Representative: Hoefer & Partner Patentanwälte mbB

(56) References cited:
- CN-A- 113 837 920
- CN-A- 114 972 001
- GB-A- 2 600 203
- US-A1- 2022 301 523

## Description

### Cross Reference to Related Applications

This application claims the benefit of U.S. Provisional Application No. 63/503,175, filed on May 19th, 2023.

### Field

The present invention is related to rendering processing, and more particularly, to a method for performing automatic activation control regarding variable rate shading (VRS), and an associated apparatus.

### Background

According to the related art, a mobile device such as a multifunctional mobile phone may be arranged to visit an application (App) store for obtaining a variety of games therefrom, and the games may require a large amount of mobile system resources, and therefore it may become challenging to fulfill better user experience. For example, high resolution and high frame-rate games may increase the requirement of computing powers beyond the capabilities of the mobile platform and consume more battery power. One or more suggestions may be proposed to try solving the problems, but further problems such as some side effects may be introduced. More particularly, it is suggested that the mobile device such as the multifunctional mobile phone may support VRS hardware in order to provide a VRS function. As activating the VRS function during rendering can gain benefit on power reduction and bandwidth saving, it is one choice to increase efficiency of graphics processing unit (GPU) computing power. However, using the VRS function may require code change for adding corresponding graphic application programming interface (API) calling on an application by a developer. In some type of rendering, using the VRS function may even cause rendering to go wrong, for example, because the pixel result of any pixel is different. As a result, the application developer may have to be familiar with various VRS use cases to balance between the benefit, the correctness and the quality, or spending lots of time on trial and error may be needed, causing the associated costs such as labor costs to be increased. Thus, a novel method and associated architecture are needed for solving the problems without introducing any side effect or in a way that is less likely to introduce a side effect.

CN 113 837 920 A and CN 114 972 001 A disclose image rendering methods and corresponding devices, which use variable rate shading (VRS).

GB 2 600 203 A discloses graphic processing using VRS.

### Summary

It is an objective of the present invention to provide a method for performing automatic activation control regarding VRS, and an associated apparatus, in order to solve the above-mentioned problems. A method and an apparatus according to the invention are defined in the independent claims. The dependent claims define preferred embodiments thereof.

At least one embodiment of the present invention provides a method according to claim 1.

At least one embodiment of the present invention provides an apparatus according to claim 15.

It is an advantage of the present invention that, the present invention method, as well as the associated apparatus such as the processing circuit and the electronic device, can automatically activate VRS without introducing any related art problem. More particularly, the method of the present invention, such as the low overhead auto-activated (or autoactivated) VRS method, can reduce the code change effort of any application developer using the VRS, and can also help original equipment manufacturer (OEM) or original design manufacturer (ODM) parties (e.g., OEM/ODM customers of an integrated circuit (IC) design company) landing the VRS function faster. In addition, the present invention method and apparatus can solve the related art problems without introducing any side effect or in a way that is less likely to introduce a side effect.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a diagram illustrating an automatic VRS control architecture within an electronic device according to an embodiment of the present invention.
FIG. 2 illustrates a low overhead autoactivated VRS control scheme of a method for performing automatic activation control regarding VRS according to an embodiment of the present invention.
FIG. 3 illustrates various ways regarding implementation of the low overhead autoactivated VRS control scheme shown in FIG. 2 according to some embodiments of the present invention.
FIG. 4 illustrates a classification and shading rate decision control scheme of the method according to an embodiment of the present invention.
FIG. 5 illustrates a rendering control scheme of the method according to an embodiment of the present invention.
FIG. 6 illustrates respective examples of multiple images involved with the rendering control scheme shown in FIG. 5 according to an embodiment of the present invention.
FIG. 7 illustrates a shading rate control scheme of the method according to an embodiment of the present invention.
FIG. 8 illustrates, in the right half part thereof, an individual-object-based shading rate adjustment control scheme of the method according to an embodiment of the present invention, where a whole-frame-based rendering control scheme may be illustrated in the left half part of FIG. 8 for better comprehension.
FIG. 9 illustrates, in the right half part thereof, a resultant image obtained by using the method according to an embodiment of the present invention, where a resultant image obtained without using the method may be illustrated in the left half part of FIG. 9 for better comprehension.
FIG. 10 is a diagram illustrating the electronic device involved with the method according to an embodiment of the present invention.
FIG. 11 is a flowchart of the method according to an embodiment of the present invention.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

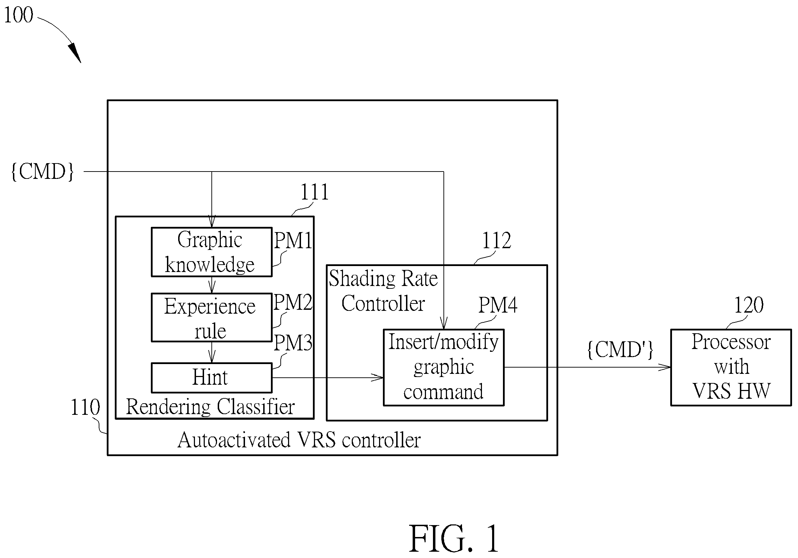

FIG. 1 is a diagram illustrating an automatic VRS control architecture within an electronic device 100 according to an embodiment of the present invention. The automatic VRS control architecture of the electronic device 100 may comprise an autoactivated VRS controller 110 and at least one processor (e.g., one or more processors) equipped with VRS hardware (labeled "Processor with VRS HW" for brevity), collectively referred to as the processor 120, and the autoactivated VRS controller 110 comprises a rendering classifier 111 and a shading rate controller 112. For better comprehension, the rendering classifier 111 comprises multiple processing modules {PM} such as the processing modules PM1, PM2 and PM3 arranged to classify rendering operations and decide shading rates by graphic knowledge, experience rule and hint, respectively (labeled "Graphic knowledge", "Experience rule" and "Hint" for brevity), and the shading rate controller 112 may be illustrated to comprise another processing module PM such as the processing module PM4 arranged to insert or modify graphic commands (labeled "Insert/modify graphic command" for brevity), for converting at least one set of original graphic commands {CMD} into at least one set of new graphic commands {CMD'}, where the processor 120 may be implemented by way of a GPU equipped with VRS hardware, but the present invention is not limited thereto. According to some embodiments, the architecture shown in FIG. 1 may vary.

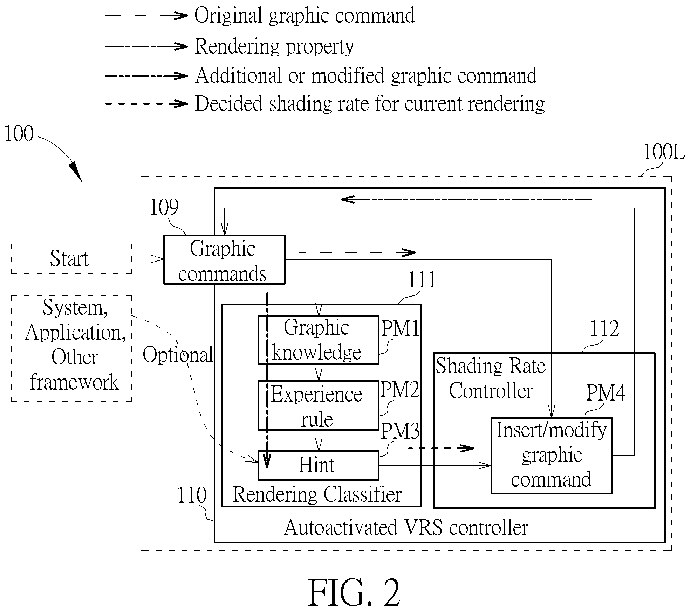

FIG. 2 illustrates a low overhead autoactivated VRS control scheme of a method for performing automatic activation control regarding VRS according to an embodiment of the present invention, where the method can be applied to a processing circuit within the electronic device 100. When operating according to the method, the processing circuit automatically activates the VRS (or the VRS hardware) without introducing any related art problem, and more particularly, dynamically control the shading rate based on rendering classification, and the associated operations may comprise:
(1) the autoactivated VRS controller 110 utilises the rendering classifier 111 to intercept the aforementioned at least one set of original graphic commands {CMD} on a command path to obtain (e.g., retrieve) at least one rendering property from the aforementioned at least one set of original graphic commands {CMD}, for classifying rendering corresponding to the aforementioned at least one set of original graphic commands {CMD};
(2) the autoactivated VRS controller 110 utilises the rendering classifier 111 to classify the rendering corresponding to the aforementioned at least one set of original graphic commands {CMD} into at least one predetermined rendering type among multiple predetermined rendering types according to the aforementioned at least one rendering property, in order to determine at least one shading rate corresponding to the aforementioned at least one predetermined rendering type for the rendering corresponding to the aforementioned at least one set of original graphic commands {CMD}; and
(3) the autoactivated VRS controller 110 utilises the shading rate controller 112 to control the processing circuit to selectively activate a VRS function of the processing circuit, such as the VRS function of the VRS hardware in the processor 120, for rendering at the aforementioned at least one shading rate corresponding to the aforementioned at least one predetermined rendering type; where a graphic control architecture within the processing circuit may comprise multiple layers, and the command path may start from an upper layer among the multiple layers of the graphic control architecture and reach a lower layer among the multiple layers, but the present invention is not limited thereto. For example, the aforementioned at least one set of original graphic commands {CMD} may be sent from the upper layer among the multiple layers toward the lower layer among the multiple layers, and may be intercepted by the rendering classifier 111, for being converted into the aforementioned at least one set of new graphic commands {CMD'} by the shading rate controller 112.

The rendering classifier 111 and the shading rate controller 112 can be implemented in either a same layer or different layers among the multiple layers. As shown in FIG. 2, the autoactivated VRS controller 110 (or the rendering classifier 111 and the shading rate controller 112 therein) may be positioned in at least one predetermined layer such as one or more predetermined layers 100L (which may be collectively referred to as the predetermined layer(s) 100L for brevity) among the multiple layers, and the graphic commands 109 may be illustrated to indicate the aforementioned at least one set of original graphic commands {CMD} for being intercepted from the command path by the rendering classifier 111 as well as the aforementioned at least one set of new graphic commands {CMD'} sent or injected into the command path by the shading rate controller 112. When starting to intercept the aforementioned at least one set of original graphic commands {CMD} on the command path (labeled "Start" for brevity), the rendering classifier 111 obtains the aforementioned at least one rendering property from the aforementioned at least one set of original graphic commands {CMD} and classify the rendering into the aforementioned at least one predetermined rendering type according to the aforementioned at least one rendering property (e.g., the rendering properties from the graphic commands 109 to the multiple processing modules {PM} such as the processing modules PM1, PM2 and PM3 as shown in FIG. 2), in order to determine the aforementioned at least one shading rate for the rendering (e.g., the decided shading rate for the current rendering as shown in FIG. 2). During utilizing the shading rate controller 112 to control the processing circuit to selectively activate the VRS function for rendering at the aforementioned at least one shading rate corresponding to the aforementioned at least one predetermined rendering type, the autoactivated VRS controller 110 utilises the shading rate controller 112 to perform at least one operation among a command insertion operation (e.g., an operation of inserting one or more graphic commands) and a command modifying operation (e.g., an operation of modifying one or more graphic commands) on the aforementioned at least one set of original graphic commands {CMD}, in order to convert the aforementioned at least one set of original graphic commands {CMD} such as the original graphic commands shown in FIG. 2 into the aforementioned at least one set of new graphic commands {CMD'} such as the additional or modified graphic commands shown in FIG. 2, for controlling the processing circuit to perform rendering corresponding to the aforementioned at least one set of new graphic commands {CMD'} at the aforementioned at least one shading rate (e.g., the decided shading rate for the current rendering as shown in FIG. 2), rather than performing the rendering corresponding to the aforementioned at least one set of original graphic commands {CMD}.

Based on the low overhead autoactivated VRS control scheme, the rendering classifier 111 classifies the rendering corresponding to any set of original graphic commands {CMD} among the aforementioned at least one set of original graphic commands {CMD} into any type (e.g., a classified type of rendering) among the multiple predetermined rendering types by the graphic knowledge, the experience rule and/or an optional hint (labeled "Optional" for brevity), and assign an appropriate shading rate for the rendering corresponding to the aforementioned any type. The optional hint is sent by a system (e.g., the system in the upper layer), an application (e.g., a first application such as a game application), any other framework, etc. In addition, the shading rate controller 112 refers to the decision result of the rendering classifier 111, such as the appropriate shading rate, to activate the VRS hardware and set the shading rate as the appropriate shading rate by automatically adding at least one VRS required graphic command.

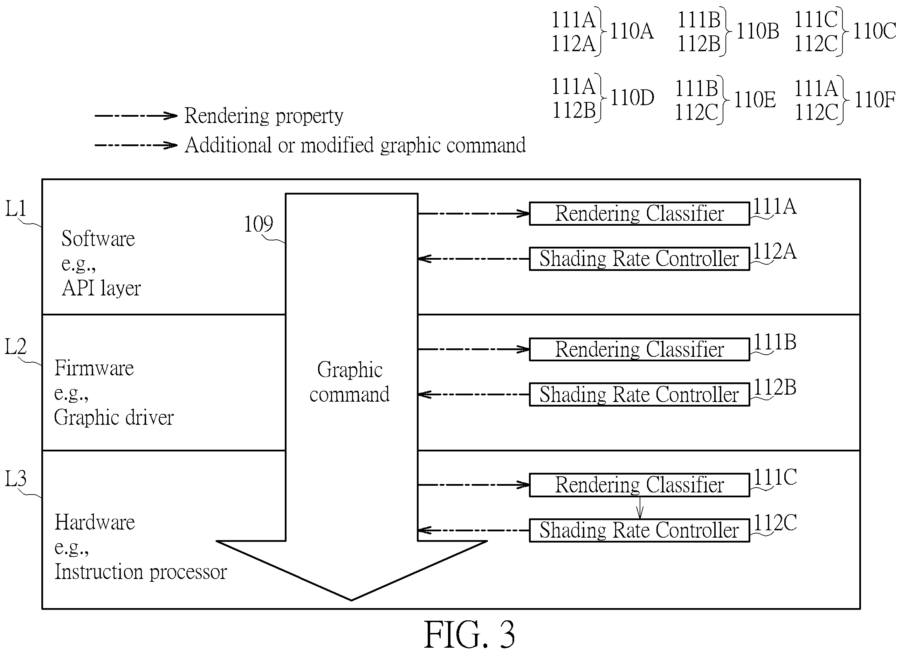

FIG. 3 illustrates various ways regarding implementation of the low overhead autoactivated VRS control scheme shown in FIG. 2 according to some embodiments of the present invention. For example, in the graphic control architecture shown in FIG. 3, the multiple layers thereof may comprise at least one software layer L1, at least one firmware layer L2, and at least one hardware layer L3 (respectively labeled "Software", "Firmware" and "Hardware" for brevity), and the rendering classifier 111 and the shading rate controller 112 can be implemented in either the same layer or different layers. More particularly, the cases that the rendering classifier 111 and the shading rate controller 112 are implemented in the same layer may comprise:
(Case #1) when the predetermined layer(s) 100L comprise a software layer (e.g., an API layer) among the aforementioned at least one software layer L1, the autoactivated VRS controller 110, the rendering classifier 111 and the shading rate controller 112 may be implemented as the autoactivated VRS controller 110A, the rendering classifier 111A and the shading rate controller 112A, respectively;
(Case #2) when the predetermined layer(s) 100L comprise a firmware layer among the aforementioned at least one firmware layer L2, the autoactivated VRS controller 110, the rendering classifier 111 and the shading rate controller 112 may be implemented as the autoactivated VRS controller 110B, the rendering classifier 111B and the shading rate controller 112B, respectively, where the autoactivated VRS controller 110B may be implemented within a graphic driver; and
(Case #3) when the predetermined layer(s) 100L comprise a hardware layer among the aforementioned at least one hardware layer L3, the autoactivated VRS controller 110, the rendering classifier 111 and the shading rate controller 112 may be implemented as the autoactivated VRS controller 110C, the rendering classifier 111C and the shading rate controller 112C, respectively, where the autoactivated VRS controller 110C may be implemented within an instruction processor;
   but the present invention is not limited thereto. In some examples, the cases that the rendering classifier 111 and the shading rate controller 112 are implemented in different layers may comprise:
(Case #4) when the predetermined layer(s) 100L comprise a software layer (e.g., the API layer) among the aforementioned at least one software layer L1 and a firmware layer among the aforementioned at least one firmware layer L2, the autoactivated VRS controller 110, the rendering classifier 111 and the shading rate controller 112 may be implemented as the autoactivated VRS controller 110D, the rendering classifier 111A and the shading rate controller 112B, respectively, where the rendering classifier 111A may be implemented within the API layer, and the shading rate controller 112B may be implemented within the graphic driver;
(Case #5) when the predetermined layer(s) 100L comprise a firmware layer among the aforementioned at least one firmware layer L2 and a hardware layer among the aforementioned at least one hardware layer L3, the autoactivated VRS controller 110, the rendering classifier 111 and the shading rate controller 112 may be implemented as the autoactivated VRS controller 110E, the rendering classifier 111B and the shading rate controller 112C, respectively, where the rendering classifier 111B may be implemented within the graphic driver, and the shading rate controller 112C may be implemented within the instruction processor; and
(Case #6) when the predetermined layer(s) 100L comprise a software layer (e.g., the API layer) among the aforementioned at least one software layer L1 and a hardware layer among the aforementioned at least one hardware layer L3, the autoactivated VRS controller 110, the rendering classifier 111 and the shading rate controller 112 may be implemented as the autoactivated VRS controller 110F, the rendering classifier 111A and the shading rate controller 112C, respectively, where the rendering classifier 111A may be implemented within the API layer, and the shading rate controller 112C may be implemented within the instruction processor;
   but the present invention is not limited thereto. As long as the implementation of the present invention will not be hindered, the architecture of the autoactivated VRS controller 110 in the cases that the rendering classifier 111 and the shading rate controller 112 are implemented in different layers may vary.

As any layer among the multiple layers may have a VRS control interface, when the shading rate controller 112 is implemented in the aforementioned any layer, as long as the shading rate controller 112 can receive the instructions from the rendering classifier 111, the shading rate can be controlled at this layer by the autoactivated VRS controller 110 (or the shading rate controller 112 therein). For example, the rendering type can be determined from the interception of the aforementioned at least one set of original graphic commands {CMD} in the API layer, but the autoactivated VRS control using the aforementioned at least one set of new graphic commands {CMD'} may be implemented by modifying one or more registers (e.g., one or more hardware control registers) of the hardware layer, having no need to strictly using the same-layer architecture with the aforementioned at least one set of original graphic commands {CMD} and the aforementioned at least one set of new graphic commands {CMD'} being transmitted in the same layer, since the overhead of changing the one or more registers is lower than that of controlling through API, where directly changing the one or more registers in the lower layer can reduce the computational load of using the upper layer API to call the lower layer.

Based on the low overhead autoactivated VRS control scheme, any rendering property among the aforementioned at least one rendering property may comprise one or a combination of at least one pipeline state, at least one buffer setting, at least one texture setting, at least one shader code and at least one enabled extension. In addition, the multiple predetermined rendering types may comprise a first predetermined rendering type regarding rendering at least one normal three-dimensional (3D) object (e.g. one or more normal 3D objects), a second predetermined rendering type regarding rendering at least one vegetation object (e.g. one or more vegetation objects), and at least one other predetermined rendering type regarding at least one predetermined image processing operation (e.g., one or more predetermined image processing operations). For example, the aforementioned at least one predetermined image processing operation may comprise any operation among the operations of post-processing, rendering visual effects (VFX), rendering at least one user interface (UI), rendering based on a depth image and rendering at least one protected object. Additionally, the rendering corresponding to the aforementioned at least one set of original graphic commands may comprise any rendering operation among multiple rendering operations respectively corresponding to multiple rendering control levels. For example, the multiple rendering control levels may comprise a drawcall (or draw-call) level, a renderpass (or render-pass) level and a thread-process level. For the case that the rendering comprises the rendering operation corresponding to the drawcall level, the aforementioned any set of original graphic commands {CMD} may comprise (or contain) little graphic commands. For the case that the rendering comprises the rendering operation corresponding to the renderpass level, the aforementioned any set of original graphic commands {CMD} may comprise (or contain) multiple graphic commands, where the graphic commands count thereof in the renderpass level may be greater than that of the little graphic commands in the drawcall level. For the case that the rendering comprises the rendering operation corresponding to the thread-process level, the aforementioned any set of original graphic commands {CMD} may comprise (or contain) a series graphic command, where the graphic commands count thereof in the thread-process level may be greater than that of the multiple graphic commands in the renderpass level. The applications that can be supported by the autoactivated VRS controller 110 may have VRS function interfaces for interacting with the autoactivated VRS controller 110. More particularly, the autoactivated VRS controller 110 can support an application written in a language having a VRS function interface and use the VRS function interface to control the shading rate, and the application does not need to use the VRS function interface by itself. Examples of the applications that can be supported by the autoactivated VRS controller 110 may include, but are not limited to: Vulkan applications, OpenGL/ES applications, and any applications written in any other graphic language having any VRS function interface, such as DirectX applications, etc.

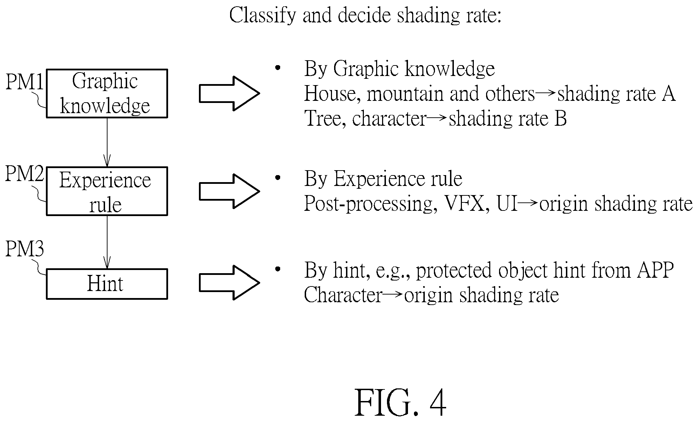

FIG. 4 illustrates a classification and shading rate decision control scheme of the method according to an embodiment of the present invention. The rendering classifier 111 may utilize the processing modules PM1, PM2 and PM3 to classify the rendering operations and decide the shading rates by graphic knowledge, experience rule and hint, respectively (labeled "Graphic knowledge", "Experience rule" and "Hint" for brevity). The aforementioned at least one set of original graphic commands {CMD} may comprise a first set of original graphic commands {CMD(1)}, and the rendering classifier 111 may intercept the first set of original graphic commands {CMD(1)} on the command path to obtain a first rendering property from the first set of original graphic commands {CMD(1)}, for classifying rendering corresponding to the first set of original graphic commands {CMD(1)}, and classify the rendering corresponding to the first set of original graphic commands {CMD(1)} into the first predetermined rendering type regarding rendering the normal 3D object(s) according to the first rendering property, in order to determine a first shading rate (e.g., a shading rate A) corresponding to the first predetermined rendering type for the rendering corresponding to the first set of original graphic commands {CMD(1)}. For example, the shading rate controller 112 may control the processing circuit to activate the VRS function of the processing circuit, for rendering at the first shading rate (e.g., the shading rate A) corresponding to the first predetermined rendering type, and more particularly, perform at least one first operation among the command insertion operation and the command modifying operation on the first set of original graphic commands { CMD(1)}, in order to convert the first set of original graphic commands {CMD(1)} into a first set of new graphic commands {CMD'(1)} among the aforementioned at least one set of new graphic commands {CMD'}, for controlling the processing circuit to perform rendering corresponding to the first set of new graphic commands {CMD'(1)} at the first shading rate (e.g., the shading rate A), rather than performing the rendering corresponding to the first set of original graphic commands {CMD(1)}. As shown in FIG. 4, when the current rendering (e.g., the rendering corresponding to the first set of original graphic commands {CMD(1)}) comprises an operation of rendering the normal 3D object(s) such as one or more houses, one or more mountains and others, the rendering classifier 111 may classify the current rendering into the first predetermined rendering type and determine the shading rate for the current rendering to be equal to the first shading rate such as the shading rate A, but the present invention is not limited thereto. For example, in a situation where a certain object among these objects is determined as a protected object according to a protected object hint from the application (or "APP") (e.g., the first application such as the game application), the rendering classifier 111 may determine the shading rate for rendering this object to be equal to a default shading rate (e.g., an original shading rate) of the processing circuit.

In addition, the aforementioned at least one set of original graphic commands {CMD} may further comprise a second set of original graphic commands {CMD(2)}, and the rendering classifier 111 may intercept the second set of original graphic commands {CMD(2)} on the command path to obtain a second rendering property from the second set of original graphic commands {CMD(2)}, for classifying rendering corresponding to the second set of original graphic commands {CMD(2)}, and classify the rendering corresponding to the second set of original graphic commands {CMD(2)} into the second predetermined rendering type regarding rendering the vegetation object(s) according to the second rendering property, in order to determine a second shading rate (e.g., a shading rate B) corresponding to the second predetermined rendering type for the rendering corresponding to the second set of original graphic commands {CMD(2)}. For example, the shading rate controller 112 may control the processing circuit to activate the VRS function of the processing circuit, for rendering at the second shading rate (e.g., the shading rate B) corresponding to the second predetermined rendering type, and more particularly, perform at least one second operation among the command insertion operation and the command modifying operation on the second set of original graphic commands {CMD(2)}, in order to convert the second set of original graphic commands {CMD(2)} into a second set of new graphic commands {CMD'(2)} among the aforementioned at least one set of new graphic commands {CMD'}, for controlling the processing circuit to perform rendering corresponding to the second set of new graphic commands {CMD'(2)} at the second shading rate (e.g., the shading rate B), rather than performing the rendering corresponding to the second set of original graphic commands {CMD(2)}. As shown in FIG. 4, when the current rendering (e.g., the rendering corresponding to the second set of original graphic commands {CMD(2)}) comprises an operation of rendering the vegetation object(s) such as one or more trees, one or more characters (e.g., a representation of an individual personality in a fictional, dramatic and/or game-related work), etc., the rendering classifier 111 may classify the current rendering into the second predetermined rendering type and determine the shading rate for the current rendering to be equal to the second shading rate such as the shading rate B, but the present invention is not limited thereto. For example, in a situation where a certain object among these objects is determined as a protected object according to a protected object hint from the application (or "APP") (e.g., the first application such as the game application), the rendering classifier 111 may determine the shading rate for rendering this object to be equal to the default shading rate (e.g., the original shading rate) of the processing circuit.

Additionally, the aforementioned at least one set of original graphic commands {CMD} may further comprise another set of original graphic commands {CMD(3)}, and the rendering classifier 111 may intercept the other set of original graphic commands {CMD(3)} on the command path to obtain another rendering property from the other set of original graphic commands {CMD(3)}, for classifying rendering corresponding to the other set of original graphic commands {CMD(3)}, and classify the rendering corresponding to the other set of original graphic commands {CMD(3)} into another predetermined rendering type among the multiple predetermined rendering types (or among the aforementioned at least one other predetermined rendering type) according to the other rendering property, in order to determine another shading rate corresponding to the other predetermined rendering type for the rendering corresponding to the other set of original graphic commands {CMD(3)}, where the other shading rate is equal to the default shading rate (e.g., the original shading rate) of the processing circuit. For example, the shading rate controller 112 may control the processing circuit to deactivate the VRS function of the processing circuit, for rendering at the other shading rate (e.g., the default shading rate such as the original shading rate) corresponding to the other predetermined rendering type, and more particularly, controlling the processing circuit to perform rendering corresponding to the other set of new graphic commands {CMD(3)} at the other shading rate (e.g., the default shading rate such as the original shading rate). As shown in FIG. 4, when the current rendering (e.g., the rendering corresponding to the other set of original graphic commands {CMD(3)}) comprises any predetermined image processing operation among the aforementioned at least one predetermined image processing operation (e.g., the operations of the post-processing, rendering the VFX, rendering the UI(s), rendering based on the depth image and rendering the protected object(s)), the rendering classifier 111 may classify the current rendering into the other predetermined rendering type and determine the shading rate for the current rendering to be equal to the other shading rate (e.g., the default shading rate such as the original shading rate).

Regarding the architecture shown in FIG. 1, the autoactivated VRS controller 110 (or the rendering classifier 111 and the shading rate controller 112 therein) may be arranged to control the processor 120 to render any object among all objects at any predetermined shading rate among multiple predetermined shading rates. For example, the multiple predetermined shading rates may comprise the first shading rate such as the shading rate A, the second shading rate such as the shading rate B, and the default shading rate such as the original shading rate, where the default shading rate such as the original shading rate may be higher (or much higher) than any other shading rate among the multiple predetermined shading rates, but the present invention is not limited thereto. According to some embodiments, the multiple predetermined shading rates may vary. For example, the multiple predetermined shading rates may comprise more shading rates. In some examples, the default shading rate such as the original shading rate may be the maximum of the multiple predetermined shading rates.

In the invention, based on the classification and shading rate decision control scheme, the rendering classifier 111 dynamically decides whether to activate the VRS function on a certain type of rendering according to the graphic knowledge, the experience rule, and/or the optional hint, rather than just applying the VRS to all rendering operations. The graphic knowledge may comprise some strategy or policy which can be used for performing selection or filtering on the rendering property to identify a VRS targeting rendering such as the rendering operation(s) to which the VRS should be applied. For example, if the rendering is involved with both reading and writing the color and depth buffers, indicating that it may be used for drawing normal 3D object(s) in a main scene, the autoactivated VRS controller 110 can apply the VRS to the rendering. In addition, the experience rule may comprise avoiding using the VRS when some rendering property condition(s) are met. For example, if the rendering is involved with an object having only simple geometry, indicating that it may be used for performing image processing or attaching UI(s) onto a main scene image, the autoactivated VRS controller 110 can prevent applying the VRS because the rendering result may break or affect game playing. Additionally, regarding the hint, the interface between the application, the system and/or any other control framework can be used for providing more controlling information or parameter(s) on the VRS activation. For example, the application (e.g., the first application such as the game application) can give the hint to specify the time interval in which the autoactivated VRS controller 110 should not activate the VRS for protecting some important object rendering such as the rendering of a certain important object. For another example, a list on the running system can give the hint to specify only auto-activate (or autoactivate) VRS on certain thread(s)/process(es), which may be relatively high GPU loading applications.

More particularly, the rendering classifier 111 can also provide multiple decision levels according to the type of rendering, such that the shading rate controller 112 can apply different shading rates. For example, in the case of the post-processing, the rendering classifier 111 may use the decision level of 1x1 (e.g., (1 * 1)) pixel; in the case of rendering the vegetation object(s) such as trees, grasses, etc., the rendering classifier 111 may use the decision level of 1x2 (e.g., (1 * 2)) pixels; and in the case of rendering the normal 3D object(s) such as houses, mountains, etc., the rendering classifier 111 may use the decision level of 2x2 (e.g., (2 * 2)) pixels. In addition, the rendering classifier 111 can perform classification before the object(s) are rendered, because the decision can be based on information such as the pipeline state, the texture setting, etc. available before submitting commands to the GPU, and this is why it is low overhead, since the rendering classifier 111 does not reply on analyzing any rendering result. Additionally, the rendering classifier 111 can also decide to disable the auto-activation (or autoactivation) on some condition (for example, when the system loading is low), where any other control framework can also give the hint to the rendering classifier 111 to disable the autoactivation.

Some implementation details may be further described as follows. The shading rate controller 112 may activate the VRS function (or the VRS hardware) by automatically adding one or more VRS required graphic commands according to the decision of the rendering classifier 111. For example, if it is determined to implement the autoactivated VRS controller 110 in at least the upper layer, adding an extra graphic command API will be helpful, and the autoactivated VRS controller 110 (e.g., the autoactivated VRS controller 110A) may access the graphic commands 109 on the command path via the extra graphic command API. For another example, if it is determined to implement the autoactivated VRS controller 110 in at least the lower layer, the autoactivated VRS controller 110 (e.g., the autoactivated VRS controller 110C) may access the graphic commands 109 on the command path via the register value(s) of the hardware control register(s), and this implementation may be more dependent on the VRS hardware control interface. In some examples, if it is determined to implement the autoactivated VRS controller 110 in at least the graphic API layer, the VRS API such as the per-draw based VRS API (also called pipeline based VRS or object based VRS) can be used. The decided shading rate can be applied to the rendering right away, since the rendering classifier 111 can perform the rendering classification before the object is rendered.

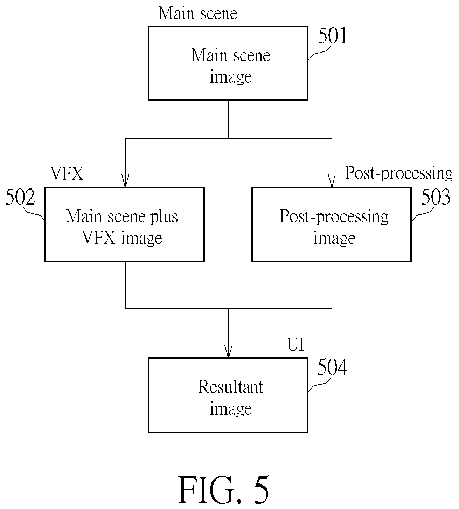

FIG. 5 illustrates a rendering control scheme of the method according to an embodiment of the present invention. For example, the associated operations of the rendering control scheme may comprise:
(1) in a first phase, the processing circuit may render the normal 3D object(s) such as houses, mountains, etc. and the vegetation object(s) such as trees, grasses, etc. to generate a main scene image 501 of the main scene;
(2) in a second phase after the first phase, the processing circuit may add or apply the VFX to the main scene image 501 to generate a main scene plus VFX image 502, and perform the post-processing on the main scene image 501 to generate a post-processing image 503; and
(3) in a third phase after the second phase, the processing circuit may combine at least one portion (e.g., a portion or all) of the main scene plus VFX image 502 with the post-processing image 503 and further add UIs (or UI objects) to generate a resultant image 504;
but the present invention is not limited thereto. For another example, the processing circuit may generate the VFX according to the main scene image 501 in the second phase, having no need to generate the whole of the main scene plus VFX image 502, and combine the VFX with the post-processing image 503 and further add the UIs (or the UI objects) to generate the resultant image 504 in the third phase. In some examples, performing the post-processing on the main scene image 501 to generate the post-processing image 503 may comprise adjusting various parameters (e.g., the brightness, the hue and the saturation) of the main scene image 501 to generate the post-processing image 503, where the post-processing image 503 may represent the adjustment result of the adjustment with respect to the main scene image 501.

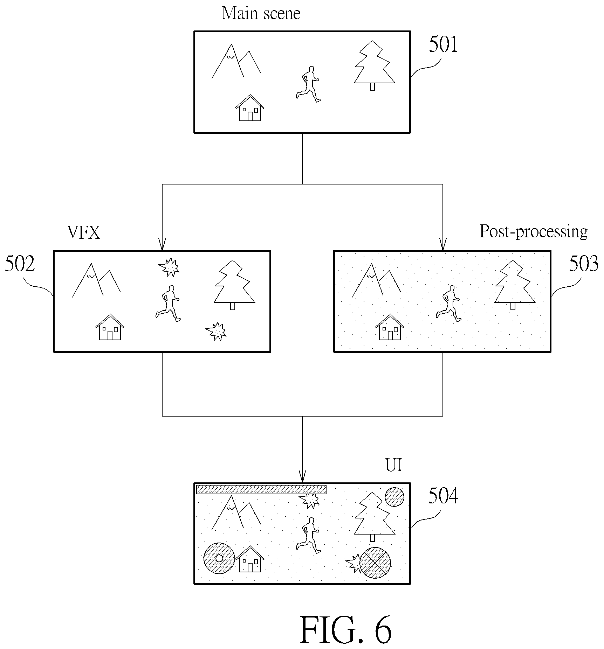

FIG. 6 illustrates respective examples of the main scene image 501, the main scene plus VFX image 502, the post-processing image 503 and the resultant image 504 involved with the rendering control scheme shown in FIG. 5 according to an embodiment of the present invention. As shown in FIG. 6, the main scene image 501 may comprise the normal 3D objects such as the house and the mountains, the vegetation object such as the tree, and a character such as a running person 714 (e.g., somebody that is running), the main scene plus VFX image 502 may comprise the normal 3D objects, the vegetation object, the character and the VFX, the post-processing image 503 may comprise the post-processing result of the post-processing with respect to the main scene image 501, and the resultant image 504 may comprise a combination of the post-processing result, the VFX and the UIs.

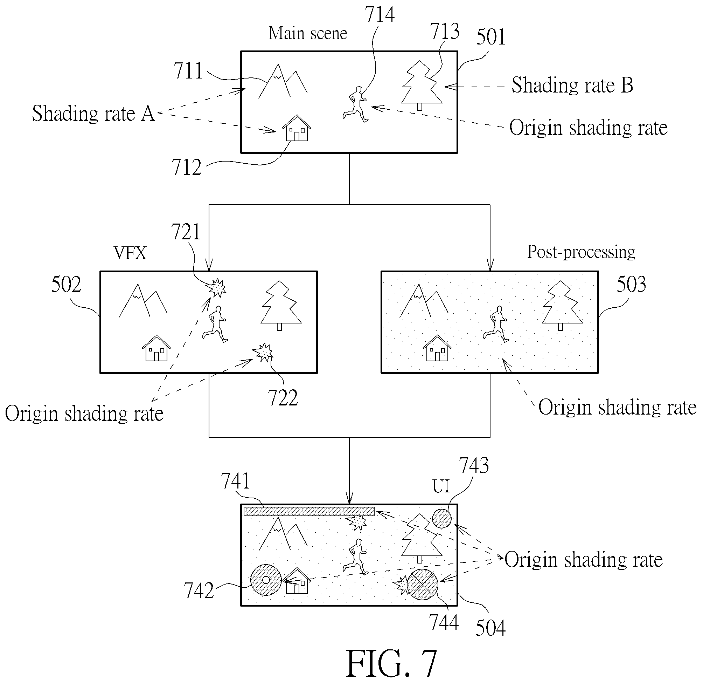

FIG. 7 illustrates a shading rate control scheme of the method according to an embodiment of the present invention. As shown in FIG. 7, the main scene image 501 may comprise the normal 3D objects such as the mountains 711 and the house 712, the vegetation object such as the tree 713, and the character such as the running person 714, the main scene plus VFX image 502 may comprise the normal 3D objects, the vegetation object, the character and the VFX such as the VFX objects 721 and 722, the post-processing image 503 may comprise the post-processing result of the post-processing with respect to the main scene image 501, and the resultant image 504 may comprise a combination of the post-processing result, the VFX and the UIs such as the UI objects 741, 742, 743 and 744.

Based on the shading rate control scheme, the associated operations of the rendering classification and shading rate decision may comprise:
(1) when the current rendering (e.g., the rendering corresponding to the first set of original graphic commands {CMD(1)}) comprises the operation of rendering the normal 3D objects such as the mountains 711 and the house 712, the rendering classifier 111 may classify the current rendering into the first predetermined rendering type and determine the shading rate for the current rendering to be equal to the first shading rate such as the shading rate A;
(2) when the current rendering (e.g., the rendering corresponding to the second set of original graphic commands {CMD(2)}) comprises the operation of rendering the vegetation object such as the tree 713, the rendering classifier 111 may classify the current rendering into the second predetermined rendering type and determine the shading rate for the current rendering to be equal to the second shading rate such as the shading rate B;
(3) when the character such as the running person 714 is determined as the protected object according to the protected object hint from the application (e.g., the first application such as the game application), the rendering classifier 111 may determine the shading rate for rendering this protected object (e.g., the character such as the running person 714) to be equal to the default shading rate such as the original shading rate;
(4) when the current rendering (e.g., the rendering corresponding to the other set of original graphic commands {CMD(3)}) comprises the operation of rendering the VFX such as the VFX objects 721 and 722, the rendering classifier 111 may classify the current rendering into the other predetermined rendering type and determine the shading rate for the current rendering to be equal to the other shading rate (or the default shading rate) such as the original shading rate;
(5) when the current rendering (e.g., the rendering corresponding to the other set of original graphic commands {CMD(3)}) comprises the operation of the post-processing, the rendering classifier 111 may classify the current rendering into the other predetermined rendering type and determine the shading rate for the current rendering to be equal to the other shading rate (or the default shading rate) such as the original shading rate; and
(6) when the current rendering (e.g., the rendering corresponding to the other set of original graphic commands {CMD(3)}) comprises the operation of rendering the UIs such as the UI objects 741, 742, 743 and 744, the rendering classifier 111 may classify the current rendering into the other predetermined rendering type and determine the shading rate for the current rendering to be equal to the other shading rate (or the default shading rate) such as the original shading rate;
but the present invention is not limited thereto. According to some embodiments, the associated operations of the rendering classification and shading rate decision may vary. For example, assuming that the character such as the running person 714 is not determined as the protected object, when the current rendering (e.g., the rendering corresponding to the second set of original graphic commands {CMD(2)}) comprises the operation of rendering the character such as the running person 714, the rendering classifier 111 may classify the current rendering into the second predetermined rendering type and determine the shading rate for the current rendering to be equal to the second shading rate such as the shading rate B.

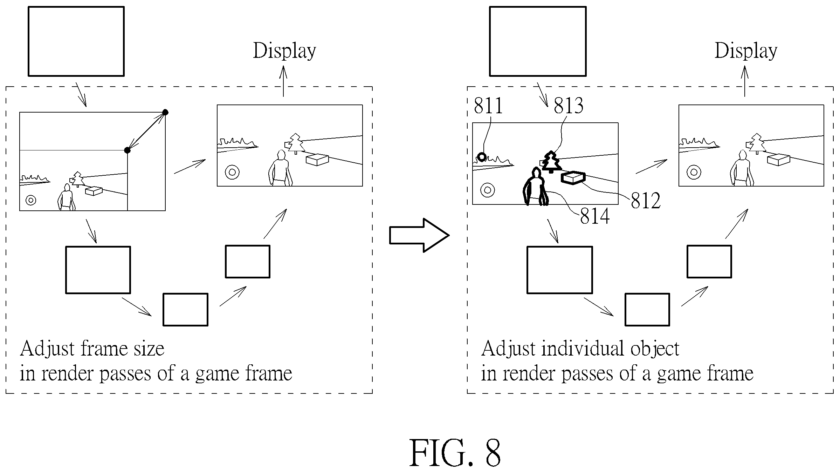

FIG. 8 illustrates, in the right half part thereof, an individual-object-based shading rate adjustment control scheme of the method according to an embodiment of the present invention, where a whole-frame-based rendering control scheme may be illustrated in the left half part of FIG. 8 for better comprehension. Assume that one or more functions of the autoactivated VRS controller 110 may be temporarily disabled to allow the processing circuit to operate according to the whole-frame-based rendering control scheme shown in the left half part of FIG. 8, but the present invention is not limited thereto. Based on the whole-frame-based rendering control scheme, the processing circuit may adjust the frame size in the render passes of a game frame.

As shown in the right half part of FIG. 8, the processing circuit (or the autoactivated VRS controller 110 therein) may operate according to the individual-object-based shading rate adjustment control scheme to achieve a better overall performance. For example, the processing circuit (or the autoactivated VRS controller 110 therein) may adjust any individual object among all individual objects in the render passes of a game frame, and more particularly, perform the rendering classification and shading rate decision in the same manner (or in a similar manner) as described above, in order to render the normal 3D objects such as the ground and the box 812, the vegetation objects such as the trees 811 and 813, the character such as the walking person 814 (e.g., somebody that is walking), and the UI(s) such as the UI object(s) at proper shading rates, respectively. For brevity, similar descriptions for this embodiment are not repeated in detail here.

According to some embodiments, the method of the present invention may also be referred to as the autoactivated VRS method (or "the Autoactivated VRS"), where the whole-frame-based rendering control scheme shown in the left half part of FIG. 8 may also be referred to as the legacy method.

**Table 1**

| | **Autoactivated VRS** | **Legacy method** |
|---|---|---|
| **Main feature** | Activate VRS function on individual object | Adjust frame size to change its resolution |
| **Limitation case** | Less limitation case | More limitation case |
| **Driver overhead** | Lower driver overhead | Higher driver overhead |
| **Adjustable level** | 1x1, 1x2, 2x2, ..., dependent on hardware | frame buffer size can be adjusted from 100% to 0% |

Table 1 illustrates some differences between the autoactivated VRS method and the legacy method. The autoactivated VRS method may focus on activating the VRS function on individual objects, while the legacy method may focus on adjusting the frame size to change its resolution. In addition, the autoactivated VRS method may have less limitation cases and lower driver overhead, while the legacy method may have more limitation cases and higher driver overhead because the legacy method typically needs to analyze the rendering result of a current frame to decide the adjustment rate of the following frame. The analysis overhead is considered as one of multiple side effects of the legacy method. For example, the adjustable level in the autoactivated VRS method may vary among various decision levels such as finer and coarser decision levels, and more particularly, may be selected from a set of predetermined decision levels, where the set of predetermined decision levels may comprise the decision levels of 1x1, 1x2, 2x1, 2x2, 2x4, 4x2 and 4x4 (from the finest decision level to the coarsest decision level), which may be dependent on hardware. In the legacy method, the frame buffer size can be adjusted from 100% to 0%.

**Table 2**

| **Type** | **Description** |
|---|---|
| Vegetation | Want to keep tree edge sharp |
| Normal 3D | For normal 3D object which form the scene, apply VRS to gain benefit |

**Table 3**

| **Rule** | **Reason** |
|---|---|
| UI | UI may be 2D object; and affect game playing if applied with VRS |
| Post-processing | Post-processing may be used for doing processing algorithm |
| Depth related processing | Depth image may be used as input of other processing algorithm |

Table 2 illustrates graphic knowledge examples such as some examples regarding the graphic knowledge, and Table 3 illustrates experience rule examples such as some examples regarding the experience rule. The autoactivated VRS controller 110 may perform the rendering classification and shading rate decision according to the graphic knowledge and the experience rule, in order to control the processor 120 to render the normal 3D objects such as the ground and the box 812, the vegetation objects such as the trees 811 and 813, the character such as the walking person 814, the UI(s) such as the UI object(s), etc. at proper shading rates, respectively.

As shown in Table 2, the autoactivated VRS controller 110 may apply the VRS to the normal 3D objects (e.g., the ground and the box 812) which form the scene, and more particularly, control the processor 120 to render the normal 3D objects at the first shading rate (e.g., the shading rate A) such as the minimum of the multiple predetermined shading rates, in order to gain the benefit of activating the VRS. In addition, the autoactivated VRS controller 110 may also apply the VRS to the vegetation objects (e.g., the trees 811 and 813), and more particularly, control the processor 120 to render the vegetation objects at the second shading rate (e.g., the shading rate B) such as a higher shading rate greater than the minimum among the multiple predetermined shading rates, in order to keep image details such as tree edges sharp, but the present invention is not limited thereto. According to some embodiments, the autoactivated VRS controller 110 may control the processor 120 to avoid applying the VRS to the rendering of the vegetation objects, and more particularly, control the processor 120 to render the vegetation objects at the default shading rate (e.g., the original shading rate) such as the maximum of the multiple predetermined shading rates.

As shown in Table 3, the autoactivated VRS controller 110 may control the processor 120 to avoid applying the VRS to the rendering of any UI among the UI(s), since the UI may be a two-dimensional (2D) object which may need less computing power and applying the VRS to the UI may affect game playing. In addition, the autoactivated VRS controller 110 may control the processor 120 to avoid applying the VRS to the post-processing, since the post-processing may be used for performing one or more processing algorithms such as some subsequent processing algorithms. This may be talking about using the fragment shader (rather than another type of shader such as the compute shader) to implement pixel-based computing algorithms, for example, generate the mipmaps (or "MIP maps"), and it may be affected by VRS to reduce the accuracy of the results. Additionally, the autoactivated VRS controller 110 may control the processor 120 to avoid applying the VRS to the depth related processing such as the related processing algorithms performed using the depth image as their inputs (rather than the operations of generating the depth image). As the depth image may be used as one or more inputs of one or more processing algorithms such as some subsequent processing algorithms, by controlling the processor 120 to avoid applying the VRS to the depth related processing, the autoactivated VRS controller 110 can prevent unwanted errors due to improper VRS, such as the unwanted errors in the related art due to forcibly applying the VRS to all rendering operations.

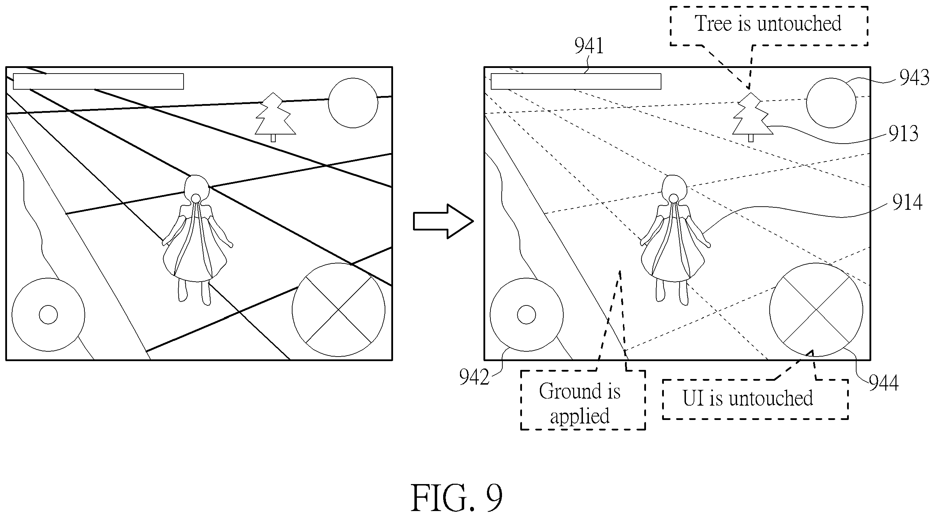

FIG. 9 illustrates, in the right half part thereof, a resultant image obtained by using the method according to an embodiment of the present invention, where a resultant image obtained without using the method may be illustrated in the left half part of FIG. 9 for better comprehension. Assume that one or more functions of the autoactivated VRS controller 110 may be temporarily disabled to allow the processing circuit to operate without using the method, but the present invention is not limited thereto. As shown in the left half part of FIG. 9, if it is determined to render without activating the VRS, the processing circuit may render all objects at the default shading rate such as the original shading rate, causing the overall performance to be degraded, for example, the first application such as the game application may be a high resolution and the high frame-rate game which may increase the requirement of the computing powers beyond the capabilities of the processor 120 and consume more battery power; otherwise, when it is determined to render while activating the VRS, the processing circuit may just apply the VRS to all rendering operations, and more particularly, render all objects at a same and lower shading rate, typically causing lower visual quality, for example, erroneous rendering results of the character, the UIs, etc. having jagged aliasing (or "jaggies") such as stair-like lines or curves that appear where there should be smooth lines or curves may occur.

As shown in the right half part of FIG. 9, the processing circuit (or the autoactivated VRS controller 110 therein) may operate according to the method to achieve a better overall performance. For example, the processing circuit (or the autoactivated VRS controller 110 therein) may perform the rendering classification and shading rate decision in the same manner (or in a similar manner) as described above, in order to render the normal 3D objects such as the ground, the vegetation object such as the tree 913, the character such as the walking person 914 (e.g., somebody that is walking), and the UIs such as the UI objects 941, 942, 943 and 944 at proper shading rates, respectively. Assuming that the vegetation object such as the tree 913 as well as the character such as the walking person 914 are determined as the protected objects according to the protected object hints from the application (e.g., the first application such as the game application), the rendering classifier 111 may determine the shading rates for rendering these protected objects (e.g., the tree 913 and the walking person 914) to be equal to the default shading rate such as the original shading rate, and the rendering results of these protected objects will not be affected or touched by activating the VRS. For example, the vegetation object such as the tree 913 may be rendered at the default shading rate such as the original shading rate, and will not be affected or touched by activating the VRS (labeled "Tree is untouched" for brevity). In addition, when the current rendering comprises the operation of rendering the UIs such as the UI objects 941, 942, 943 and 944, the rendering classifier 111 may classify the current rendering into the other predetermined rendering type and determine the shading rate for the current rendering to be equal to the other shading rate (or the default shading rate) such as the original shading rate, and the rendering result of any UI object among the UI objects 941, 942, 943 and 944 will not be affected or touched by activating the VRS (labeled "UI is untouched" for brevity). Additionally, when the current rendering comprises the operation of rendering the normal 3D objects such as the ground, the rendering classifier 111 may classify the current rendering into the first predetermined rendering type and determine the shading rate for the current rendering to be equal to the first shading rate such as the shading rate A, where the ground (or the rendering thereof) is applied with the VRS. For brevity, similar descriptions for this embodiment are not repeated in detail here.

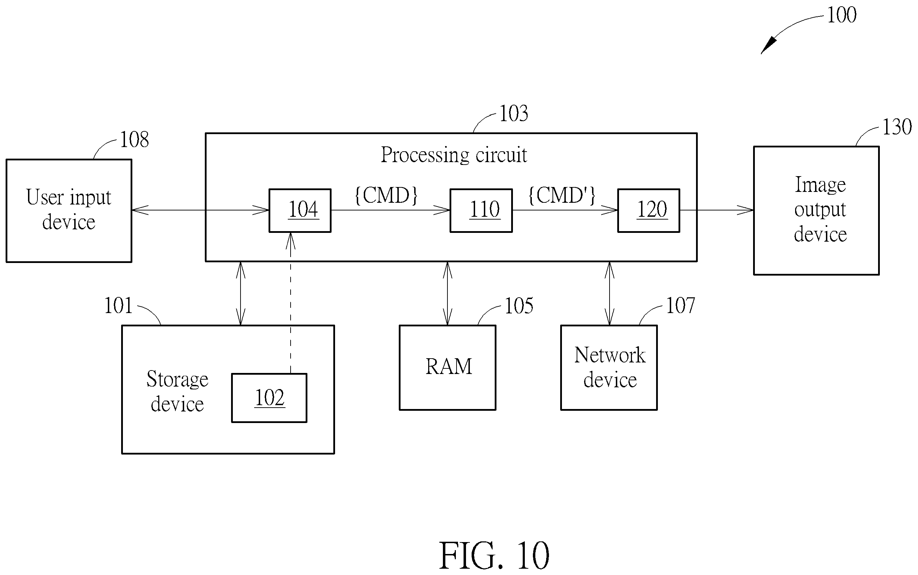

FIG. 10 is a diagram illustrating the electronic device 100 involved with the method according to an embodiment of the present invention, where the processing circuit mentioned above may be implemented as a processing circuit 103 in the electronic device 100. Examples of the electronic device 100 may include, but are not limited to: a personal computer (PC) such as a desktop computer and a laptop computer, a server, an all in one (AIO) computer, a tablet computer and a multifunctional mobile phone as well as a wearable device.

The electronic device 100 may comprise a computer-readable medium such as a storage device 101, the processing circuit 103, a random-access memory (RAM) 105, a network device 107, a user input device 108 and an image output device 130. The processing circuit 103 may be arranged to control operations of the electronic device 100. More particularly, the computer-readable medium such as the storage device 101 may be arranged to store at least one program code (e.g., one or more program codes) which may be collectively referred to as the program code 102, for being loaded onto the processing circuit 103 to control the operations of the electronic device 100. For example, the aforementioned at least one program code such as the program code 102 may comprise a first program code, for being loaded onto the processing circuit 103 to act as a first program 104 (e.g. the first application such as the game application) running on the processing circuit 103, but the present invention is not limited thereto. In some examples, for the case that the autoactivated VRS controller 110 is implemented as the autoactivated VRS controller 110A or the autoactivated VRS controller 110B, the aforementioned at least one program code such as the program code 102 may further comprise a second program code, for being loaded onto the processing circuit 103 to act as the autoactivated VRS controller 110 (e.g., the autoactivated VRS controller 110A or the autoactivated VRS controller 110B). When executed by the processing circuit 103, the second program code may cause the processing circuit 103 to operate according to the method, in order to perform the associated operations of the autoactivated VRS controller 110.

No matter whether the autoactivated VRS controller 110 is implemented as the autoactivated VRS controller 110A or the autoactivated VRS controller 110B or the autoactivated VRS controller 110C, the autoactivated VRS controller 110 may receive a set of original graphic commands {CMD} from the first program 104 (e.g. the first application such as the game application) and convert the set of original graphic commands {CMD} into a set of new graphic commands {CMD'}, for controlling the processor 120 to automatically activate the VRS without introducing any related art problem, where the set of new graphic commands {CMD'} may comprise at least one portion of graphic commands {CMD} (e.g., a portion of graphic commands {CMD} or all graphic commands {CMD }) among the set of original graphic commands {CMD}, and may further comprise one or more inserted graphic commands that are inserted among the aforementioned at least one portion of graphic commands {CMD}, and/or one or more modified graphic commands that are modified from one or more original graphic commands {CMD} among the set of original graphic commands {CMD}.

The set of original graphic commands {CMD} in this embodiment may represent the aforementioned any set of original graphic commands {CMD} among the aforementioned at least one set of original graphic commands {CMD}, and the set of new graphic commands {CMD'} in this embodiment may represent a corresponding set of new graphic commands {CMD'} among the aforementioned at least one set of new graphic commands {CMD'}. For brevity, similar descriptions for this embodiment are not repeated in detail here.

In the architecture shown in FIG. 10, the storage device 101 may be implemented by way of a hard disk drive (HDD), a solid state drive (SSD), a flash memory, etc., the processing circuit 103 may be implemented by way of one or more processors such as a central processing unit (CPU) and a GPU, a bus, etc., the RAM 105 may be implemented by way of a dynamic random-access memory (DRAM), the network device 107 may be implemented by way of one or more wireless communications control circuits and one or more wired communications control circuits, the user input device 108 may be implemented by way of a touch panel, a keyboard, a mouse, a camera, etc., and the image output device 130 may be implemented by way of a display panel such as a liquid crystal display (LCD) panel, an organic light-emitting diode (OLED) panel, etc., where at least one portion (e.g., a portion or all) of the user input device 108 and image output device 130 may be integrated into a same module such as a touch-sensitive display panel, and the processor 120 may be implemented by way of the GPU equipped with the VRS hardware, but the present invention is not limited thereto.

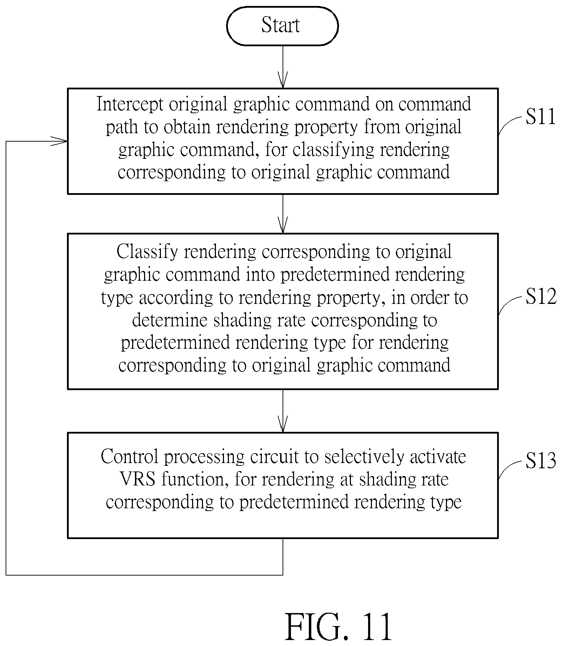

FIG. 11 is a flowchart of the method according to an embodiment of the present invention. The method can be applied to the electronic device 100 as well as the processing circuit 103 within the electronic device 100. As the autoactivated VRS controller 110 can operate based on any of various control schemes of the method as descried above, such as the low overhead autoactivated VRS control scheme, the classification and shading rate decision control scheme, the rendering control scheme, the shading rate control scheme and the individual-object-based shading rate adjustment control scheme, the autoactivated VRS controller 110 can automatically activate VRS to control the processing circuit 103 to dynamically render images with lower amounts of operations without introducing any related art problem, in order to achieve the optimal performance.

In Step S11, the autoactivated VRS controller 110 utilises the rendering classifier 111 to intercept the aforementioned at least one set of original graphic commands {CMD} on the command path to obtain the aforementioned at least one rendering property from the aforementioned at least one set of original graphic commands {CMD}, for classifying the rendering corresponding to the aforementioned at least one set of original graphic commands {CMD}.

In Step S12, the autoactivated VRS controller 110 utilises the rendering classifier 111 to classify the rendering corresponding to the aforementioned at least one set of original graphic commands {CMD} into the aforementioned at least one predetermined rendering type among the multiple predetermined rendering types according to the aforementioned at least one rendering property, in order to determine the aforementioned at least one shading rate corresponding to the aforementioned at least one predetermined rendering type for the rendering corresponding to the aforementioned at least one set of original graphic commands {CMD}.

In Step S13, the autoactivated VRS controller 110 utilises the shading rate controller 112 to control the processing circuit 103 to selectively activate the VRS function of the processing circuit 103, such as the VRS function of the VRS hardware in the processor 120, for rendering at the aforementioned at least one shading rate corresponding to the aforementioned at least one predetermined rendering type. For example, the autoactivated VRS controller 110 may utilize the shading rate controller 112 to perform the aforementioned at least one operation among the command insertion operation and the command modifying operation on the aforementioned at least one set of original graphic commands {CMD}, in order to convert the aforementioned at least one set of original graphic commands {CMD} into the aforementioned at least one set of new graphic commands {CMD'}, for controlling the processing circuit 103 to perform the rendering corresponding to the aforementioned at least one set of new graphic commands {CMD'} at the aforementioned at least one shading rate, rather than performing the rendering corresponding to the aforementioned at least one set of original graphic commands {CMD}. For brevity, similar descriptions for this embodiment are not repeated in detail here.

For better comprehension, the method may be illustrated with the working flow shown in FIG. 11, but the present invention is not limited thereto. According to some embodiments, one or more steps may be added, deleted, or changed in the working flow shown in FIG. 11. For example, in Step S11, the autoactivated VRS controller 110 utilises the rendering classifier 111 to intercept the aforementioned any set of original graphic commands {CMD} among the aforementioned at least one set of original graphic commands {CMD} on the command path to obtain the rendering property from the aforementioned any set of original graphic commands {CMD}, for classifying the rendering corresponding to the aforementioned any set of original graphic commands {CMD}; in Step S12, the autoactivated VRS controller 110 utilises the rendering classifier 111 to classify the rendering corresponding to the aforementioned any set of original graphic commands {CMD} into one predetermined rendering type (e.g., the latest classified type of rendering) among the multiple predetermined rendering types according to the rendering property, in order to determine a shading rate (e.g., the latest decided shading rate for the current rendering) corresponding to the one predetermined rendering type (e.g., the latest classified type of rendering) for the rendering corresponding to the aforementioned any set of original graphic commands {CMD}; and in Step S13, the autoactivated VRS controller 110 utilises the shading rate controller 112 to control the processing circuit 103 to selectively activate the VRS function of the processing circuit 103, for rendering at the shading rate (e.g., the latest decided shading rate for the current rendering) corresponding to the one predetermined rendering type (e.g., the latest classified type of rendering). More particularly, in Step S13, the autoactivated VRS controller 110 may utilize the shading rate controller 112 to perform at least one operation among the command insertion operation and the command modifying operation on the aforementioned any set of original graphic commands {CMD}, in order to convert the aforementioned any set of original graphic commands {CMD} into the aforementioned corresponding set of new graphic commands {CMD'}, for controlling the processing circuit 103 to perform the rendering corresponding to the aforementioned corresponding set of new graphic commands {CMD'} at the shading rate (e.g., the latest decided shading rate for the current rendering), rather than performing the rendering corresponding to the aforementioned any set of original graphic commands {CMD}. For brevity, similar descriptions for these embodiments are not repeated in detail here.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method for performing automatic activation control regarding variable rate shading, in the following also referred to as VRS, the method being applied to a processing circuit within an electronic device, the method comprising:
utilizing a rendering classifier within the processing circuit to intercept at least one set of original graphic commands on a command path to obtain at least one rendering property from the at least one set of original graphic commands, for classifying rendering corresponding to the at least one set of original graphic commands (S11); and
utilizing the rendering classifier to classify the rendering corresponding to the at least one set of original graphic commands into at least one predetermined rendering type among multiple predetermined rendering types according to the at least one rendering property, in order to determine at least one shading rate corresponding to the at least one predetermined rendering type for the rendering corresponding to the at least one set of original graphic commands (S12);
utilizing a shading rate controller within the processing circuit to control the processing circuit to selectively activate a VRS function of the processing circuit, for rendering at the at least one shading rate corresponding to the at least one predetermined rendering type (S13),
**characterized in that** the utilizing the shading rate controller within the processing circuit to control the processing circuit to selectively activate the VRS function of the processing circuit (S13) comprises:
utilizing the rendering classifier to dynamically decide whether to activate the VRS function on the at least one predetermined rendering type according to graphic knowledge, an experience rule and/or a hint.

2. The method of claim 1, wherein the graphic knowledge comprises a strategy or policy which is used for performing selection or filtering on a rendering property to identify a VRS targeting rendering to which the VRS function should be applied; and/or
the experience rule comprises avoiding using the VRS function when one or more rendering property conditions are met; and/or
the hint comprises controlling information or parameter(s) on the VRS activation,
wherein the hint is preferably provided by an interface between an application, a system and/or any other framework.

3. The method of claim 1 or 2, wherein utilizing the shading rate controller within the processing circuit to control the processing circuit to selectively activate the VRS function of the processing circuit for rendering at the at least one shading rate corresponding to the at least one predetermined rendering type (S13) further comprises:
utilizing the shading rate controller to perform at least one operation among a command insertion operation and a command modifying operation on the at least one set of original graphic commands, in order to convert the at least one set of original graphic commands into at least one set of new graphic commands, for controlling the processing circuit to perform rendering corresponding to the at least one set of new graphic commands at the at least one shading rate, rather than performing the rendering corresponding to the at least one set of original graphic commands.

4. The method of claim 3, wherein the at least one set of original graphic commands comprise a first set of original graphic commands and a second set of original graphic commands; the rendering classifier is arranged to intercept the first set of original graphic commands on the command path to obtain a first rendering property from the first set of original graphic commands, for classifying rendering corresponding to the first set of original graphic commands, and to intercept the second set of original graphic commands on the command path to obtain a second rendering property from the second set of original graphic commands, for classifying rendering corresponding to the second set of original graphic commands; the rendering classifier is arranged to classify the rendering corresponding to the first set of original graphic commands into a first predetermined rendering type among the multiple predetermined rendering types according to the first rendering property, in order to determine a first shading rate corresponding to the first predetermined rendering type for the rendering corresponding to the first set of original graphic commands; and the rendering classifier is arranged to classify the rendering corresponding to the second set of original graphic commands into a second predetermined rendering type among the multiple predetermined rendering types according to the second rendering property, in order to determine a second shading rate corresponding to the second predetermined rendering type for the rendering corresponding to the second set of original graphic commands.

5. The method of claim 4, wherein the shading rate controller is arranged to perform at least one first operation among the command insertion operation and the command modifying operation on the first set of original graphic commands, in order to convert the first set of original graphic commands into a first set of new graphic commands among the at least one set of new graphic commands, for controlling the processing circuit to perform rendering corresponding to the first set of new graphic commands at the first shading rate, rather than performing the rendering corresponding to the first set of original graphic commands; and the shading rate controller is arranged to perform at least one second operation among the command insertion operation and the command modifying operation on the second set of original graphic commands, in order to convert the second set of original graphic commands into a second set of new graphic commands among the at least one set of new graphic commands, for controlling the processing circuit to perform rendering corresponding to the second set of new graphic commands at the second shading rate, rather than performing the rendering corresponding to the second set of original graphic commands.

6. The method of any one of claims 1 to 3, wherein the at least one set of original graphic commands comprise a first set of original graphic commands; the rendering classifier is arranged to intercept the first set of original graphic commands on the command path to obtain a first rendering property from the first set of original graphic commands, for classifying rendering corresponding to the first set of original graphic commands; and the rendering classifier is arranged to classify the rendering corresponding to the first set of original graphic commands into a first predetermined rendering type among the multiple predetermined rendering types according to the first rendering property, in order to determine a first shading rate corresponding to the first predetermined rendering type for the rendering corresponding to the first set of original graphic commands.

7. The method of claim 6, wherein the shading rate controller is arranged to control the processing circuit to activate the VRS function of the processing circuit, for rendering at the first shading rate corresponding to the first predetermined rendering type.

8. The method of claim 6 or 7, wherein the at least one set of original graphic commands further comprise a second set of original graphic commands; the rendering classifier is arranged to intercept the second set of original graphic commands on the command path to obtain a second rendering property from the second set of original graphic commands, for classifying rendering corresponding to the second set of original graphic commands; and the rendering classifier is arranged to classify the rendering corresponding to the second set of original graphic commands into a second predetermined rendering type among the multiple predetermined rendering types according to the second rendering property, in order to determine a second shading rate corresponding to the second predetermined rendering type for the rendering corresponding to the second set of original graphic commands.

9. The method of claim 8, wherein the shading rate controller is arranged to control the processing circuit to activate the VRS function of the processing circuit, for rendering at the second shading rate corresponding to the second predetermined rendering type.

10. The method of any one of claims 6 to 9, wherein the at least one set of original graphic commands further comprise another set of original graphic commands; the rendering classifier is arranged to intercept the other set of original graphic commands on the command path to obtain another rendering property from the other set of original graphic commands, for classifying rendering corresponding to the other set of original graphic commands; and the rendering classifier is arranged to classify the rendering corresponding to the other set of original graphic commands into another predetermined rendering type among the multiple predetermined rendering types according to the other rendering property, in order to determine another shading rate corresponding to the other predetermined rendering type for the rendering corresponding to the other set of original graphic commands, wherein the other shading rate is equal to a default shading rate of the processing circuit;
wherein preferably the shading rate controller is arranged to control the processing circuit to deactivate the VRS function of the processing circuit, for rendering at the other shading rate corresponding to the other predetermined rendering type.

11. The method of any one of claims 1 to 10, wherein the command path starts from an upper layer among multiple layers of a graphic control architecture within the processing circuit and reaches a lower layer among the multiple layers,
wherein preferably the at least one set of original graphic commands are sent from the upper layer among the multiple layers toward the lower layer among the multiple layers, and are intercepted by the rendering classifier, for being converted into at least one set of new graphic commands by the shading rate controller; and/or
wherein preferably the multiple layers of the graphic control architecture comprise at least one software layer, at least one firmware layer and at least one hardware layer; and the rendering classifier and the shading rate controller are implemented in either a same layer or different layers among the multiple layers.

12. The method of any one of claims 1 to 11, wherein any rendering property among the at least one rendering property comprises one or a combination of at least one pipeline state, at least one buffer setting, at least one texture setting, at least one shader code and at least one enabled extension.

13. The method of any one of claims 1 to 12, wherein the multiple predetermined rendering types comprise a first predetermined rendering type regarding rendering at least one normal three-dimensional, in the following also referred to as 3D, object, a second predetermined rendering type regarding rendering at least one vegetation object, and at least one other predetermined rendering type regarding at least one predetermined image processing operation;
wherein preferably the at least one predetermined image processing operation comprises any operation among operations of post-processing, rendering visual effects, in the following also referred to as VFX, rendering at least one user interface, in the following also referred to as UI, rendering based on a depth image and rendering at least one protected object.

14. The method of any one of claims 1 to 13, wherein the rendering corresponding to the at least one set of original graphic commands comprises any rendering operation among multiple rendering operations respectively corresponding to multiple rendering control levels;
wherein preferably the multiple rendering control levels comprise a drawcall level, a renderpass level and a thread-process level.

15. An apparatus that is adapted to operate according to the method of any one of claims 1 to 14, wherein the apparatus comprises at least the processing circuit (103) within the electronic device (100).

## Patentansprüche

1. Verfahren zum Durchführen einer automatischen Aktivierungssteuerung bezüglich einer Schattierung mit variabler Rate, im Folgenden auch als VRS bezeichnet, wobei das Verfahren auf eine Verarbeitungsschaltung innerhalb einer elektronischen Vorrichtung angewendet wird, wobei das Verfahren umfasst:
Verwenden eines Rendering-Klassifizierers innerhalb der Verarbeitungsschaltung, um mindestens einen Satz von ursprünglichen Grafikbefehlen auf einem Befehlspfad abzufangen, um mindestens eine Rendering-Eigenschaft aus dem mindestens einen Satz von ursprünglichen Grafikbefehlen zu erhalten, um ein Rendering entsprechend dem mindestens einen Satz von ursprünglichen Grafikbefehlen zu klassifizieren (S11); und
Verwenden des Rendering-Klassifizierers, um das Rendering entsprechend dem mindestens einen Satz von ursprünglichen Grafikbefehlen in mindestens einen vorbestimmten Rendering-Typ unter mehreren vorbestimmten Rendering-Typen gemäß der mindestens einen Rendering-Eigenschaft zu klassifizieren, um mindestens eine Schattierungsrate entsprechend dem mindestens einen vorbestimmten Rendering-Typ für das Rendering entsprechend dem mindestens einen Satz von ursprünglichen Grafikbefehlen zu bestimmen (S12);
Verwenden einer Schattierungsratensteuerung innerhalb der Verarbeitungsschaltung, um die Verarbeitungsschaltung zum Rendern mit der mindestens einen Schattierungsrate entsprechend dem mindestens einen vorbestimmten Rendering-Typ zu steuern, selektiv eine VRS-Funktion der Verarbeitungsschaltung zu aktivieren, (S13),
**dadurch gekennzeichnet, dass** das Verwenden der Schattierungsratensteuerung innerhalb der Verarbeitungsschaltung, um die Verarbeitungsschaltung zu steuern, selektiv die VRS-Funktion der Verarbeitungsschaltung zu aktivieren (S13), umfasst:
Verwenden des Rendering-Klassifizierers, um dynamisch zu entscheiden, ob die VRS-Funktion für den mindestens einen vorbestimmten Rendering-Typ gemäß einem Grafikwissen, einer Erfahrungsregel und/oder einem Hinweis zu aktivieren ist.

2. Verfahren nach Anspruch 1, wobei das Grafikwissen eine Strategie oder Richtlinie umfasst, die zum Durchführen einer Auswahl oder Filterung an einer Rendering-Eigenschaft verwendet wird, um ein VRS-Targeting-Rendering zu identifizieren, auf das die VRS-Funktion angewendet werden sollte; und/oder
die Erfahrungsregel ein Vermeiden einer Verwendung der VRS-Funktion umfasst, wenn eine oder mehrere Rendering-Eigenschaftsbedingungen erfüllt sind; und/oder
der Hinweis ein Steuern von Informationen oder Parameter(n) über die VRS-Aktivierung umfasst, wobei der Hinweis vorzugsweise durch eine Schnittstelle zwischen einer Anwendung, einem System und/oder einem beliebigen anderen Framework bereitgestellt wird.

3. Verfahren nach Anspruch 1 oder 2, wobei das Verwenden der Schattierungsratensteuerung innerhalb der Verarbeitungsschaltung, um die Verarbeitungsschaltung zum Rendern mit der mindestens einen Schattierungsrate entsprechend dem mindestens einen vorbestimmten Rendering-Typ zu steuern, selektiv die VRS-Funktion der Verarbeitungsschaltung zu aktivieren, (S13), ferner umfasst:
Verwenden der Schattierungsratensteuerung, um mindestens eine Operation aus einer Befehlseinfügungsoperation und einer Befehlsmodifizierungsoperation an dem mindestens einen Satz von ursprünglichen Grafikbefehlen durchzuführen, um den mindestens einen Satz von ursprünglichen Grafikbefehlen in mindestens einen Satz von neuen Grafikbefehlen umzuwandeln, um die Verarbeitungsschaltung zu steuern, ein Rendering entsprechend dem mindestens einen Satz von neuen Grafikbefehlen mit der mindestens einen Schattierungsrate durchzuführen, anstatt das Rendering entsprechend dem mindestens einen Satz von ursprünglichen Grafikbefehlen durchzuführen.

4. Verfahren nach Anspruch 3, wobei der mindestens eine Satz von ursprünglichen Grafikbefehlen einen ersten Satz von ursprünglichen Grafikbefehlen und einen zweiten Satz von ursprünglichen Grafikbefehlen umfasst; der Rendering-Klassifizierer angeordnet ist, um den ersten Satz von ursprünglichen Grafikbefehlen auf dem Befehlspfad abzufangen, um eine erste Rendering-Eigenschaft aus dem ersten Satz von ursprünglichen Grafikbefehlen zu erhalten, um ein Rendering entsprechend dem ersten Satz von ursprünglichen Grafikbefehlen zu klassifizieren, und um den zweiten Satz von ursprünglichen Grafikbefehlen auf dem Befehlspfad abzufangen, um eine zweite Rendering-Eigenschaft aus dem zweiten Satz von ursprünglichen Grafikbefehlen zu erhalten, um ein Rendering entsprechend dem zweiten Satz von ursprünglichen Grafikbefehlen zu klassifizieren; der Rendering-Klassifizierer angeordnet ist, um das Rendering entsprechend dem ersten Satz von ursprünglichen Grafikbefehlen in einen ersten vorbestimmten Rendering-Typ unter den mehreren vorbestimmten Rendering-Typen gemäß der ersten Rendering-Eigenschaft zu klassifizieren, um eine erste Schattierungsrate entsprechend dem ersten vorbestimmten Rendering-Typ für das Rendering entsprechend dem ersten Satz von ursprünglichen Grafikbefehlen zu bestimmen; und der Rendering-Klassifizierer angeordnet ist, um das Rendering entsprechend dem zweiten Satz von ursprünglichen Grafikbefehlen in einen zweiten vorbestimmten Rendering-Typ unter den mehreren vorbestimmten Rendering-Typen gemäß der zweiten Rendering-Eigenschaft zu klassifizieren, um eine zweite Schattierungsrate entsprechend dem zweiten vorbestimmten Rendering-Typ für das Rendering entsprechend dem zweiten Satz von ursprünglichen Grafikbefehlen zu bestimmen.

5. Verfahren nach Anspruch 4, wobei die Schattierungsratensteuerung angeordnet ist, um mindestens eine erste Operation aus der Befehlseinfügungsoperation und der Befehlsmodifizierungsoperation an dem ersten Satz von ursprünglichen Grafikbefehlen durchzuführen, um den ersten Satz von ursprünglichen Grafikbefehlen in einen ersten Satz von neuen Grafikbefehlen unter dem mindestens einen Satz von neuen Grafikbefehlen umzuwandeln, um die Verarbeitungsschaltung zu steuern, ein Rendering entsprechend dem ersten Satz von neuen Grafikbefehlen mit der ersten Schattierungsrate durchzuführen, anstatt das Rendering entsprechend dem ersten Satz von ursprünglichen Grafikbefehlen durchzuführen; und die Schattierungsratensteuerung angeordnet ist, um mindestens eine zweite Operation aus der Befehlseinfügungsoperation und der Befehlsmodifizierungsoperation an dem zweiten Satz von ursprünglichen Grafikbefehlen durchzuführen, um den zweiten Satz von ursprünglichen Grafikbefehlen in einen zweiten Satz von neuen Grafikbefehlen unter dem mindestens einen Satz von neuen Grafikbefehlen umzuwandeln, um die Verarbeitungsschaltung zu steuern, ein Rendering entsprechend dem zweiten Satz von neuen Grafikbefehlen mit der zweiten Schattierungsrate durchzuführen, anstatt das Rendering entsprechend dem zweiten Satz von ursprünglichen Grafikbefehlen durchzuführen.

6. Verfahren nach einem der Ansprüche 1 bis 3, wobei der mindestens eine Satz von ursprünglichen Grafikbefehlen einen ersten Satz von ursprünglichen Grafikbefehlen umfasst; der Rendering-Klassifizierer angeordnet ist, um den ersten Satz von ursprünglichen Grafikbefehlen auf dem Befehlspfad abzufangen, um eine erste Rendering-Eigenschaft aus dem ersten Satz von ursprünglichen Grafikbefehlen zu erhalten, um ein Rendering entsprechend dem ersten Satz von ursprünglichen Grafikbefehlen zu klassifizieren; und der Rendering-Klassifizierer angeordnet ist, um das Rendering entsprechend dem ersten Satz von ursprünglichen Grafikbefehlen in einen ersten vorbestimmten Rendering-Typ unter den mehreren vorbestimmten Rendering-Typen gemäß der ersten Rendering-Eigenschaft zu klassifizieren, um eine erste Schattierungsrate entsprechend dem ersten vorbestimmten Rendering-Typ für das Rendering entsprechend dem ersten Satz von ursprünglichen Grafikbefehlen zu bestimmen.

7. Verfahren nach Anspruch 6, wobei die Schattierungsratensteuerung angeordnet ist, um die Verarbeitungsschaltung zum Rendern mit der ersten Schattierungsrate entsprechend dem ersten vorbestimmten Rendering-Typ zu steuern, die VRS-Funktion der Verarbeitungsschaltung zu aktivieren.

8. Verfahren nach Anspruch 6 oder 7, wobei der mindestens eine Satz von ursprünglichen Grafikbefehlen ferner einen zweiten Satz von ursprünglichen Grafikbefehlen umfasst; der Rendering-Klassifizierer angeordnet ist, um den zweiten Satz von ursprünglichen Grafikbefehlen auf dem Befehlspfad abzufangen, um eine zweite Rendering-Eigenschaft aus dem zweiten Satz von ursprünglichen Grafikbefehlen zu erhalten, um ein Rendering entsprechend dem zweiten Satz von ursprünglichen Grafikbefehlen zu klassifizieren; und der Rendering-Klassifizierer angeordnet ist, um das Rendering entsprechend dem zweiten Satz von ursprünglichen Grafikbefehlen in einen zweiten vorbestimmten Rendering-Typ unter den mehreren vorbestimmten Rendering-Typen gemäß der zweiten Rendering-Eigenschaft zu klassifizieren, um eine zweite Schattierungsrate entsprechend dem zweiten vorbestimmten Rendering-Typ für das Rendering entsprechend dem zweiten Satz von ursprünglichen Grafikbefehlen zu bestimmen.

9. Verfahren nach Anspruch 8, wobei die Schattierungsratensteuerung angeordnet ist, um die Verarbeitungsschaltung zum Rendern mit der zweiten Schattierungsrate entsprechend dem zweiten vorbestimmten Rendering-Typ zu steuern, die VRS-Funktion der Verarbeitungsschaltung zu aktivieren.

10. Verfahren nach einem der Ansprüche 6 bis 9, wobei der mindestens eine Satz von ursprünglichen Grafikbefehlen ferner einen anderen Satz von ursprünglichen Grafikbefehlen umfasst; der Rendering-Klassifizierer angeordnet ist, um den anderen Satz von ursprünglichen Grafikbefehlen auf dem Befehlspfad abzufangen, um eine andere Rendering-Eigenschaft aus dem anderen Satz von ursprünglichen Grafikbefehlen zu erhalten, um ein Rendering entsprechend dem anderen Satz von ursprünglichen Grafikbefehlen zu klassifizieren; und der Rendering-Klassifizierer angeordnet ist, um das Rendering entsprechend dem anderen Satz von ursprünglichen Grafikbefehlen in einen anderen vorbestimmten Rendering-Typ unter den mehreren vorbestimmten Rendering-Typen gemäß der anderen Rendering-Eigenschaft zu klassifizieren, um eine andere Schattierungsrate entsprechend dem anderen vorbestimmten Rendering-Typ für das Rendering entsprechend dem anderen Satz von ursprünglichen Grafikbefehlen zu bestimmen, wobei die andere Schattierungsrate gleich einer Standard-Schattierungsrate der Verarbeitungsschaltung ist;
wobei vorzugsweise die Schattierungsratensteuerung angeordnet ist, um die Verarbeitungsschaltung zum Rendern mit der anderen Schattierungsrate entsprechend dem anderen vorbestimmten Rendering-Typ zu steuern, die VRS-Funktion der Verarbeitungsschaltung zu deaktivieren.

11. Verfahren nach einem der Ansprüche 1 bis 10, wobei der Befehlspfad von einer oberen Schicht unter mehreren Schichten einer Grafiksteuerungsarchitektur innerhalb der Verarbeitungsschaltung beginnt und eine untere Schicht unter den mehreren Schichten erreicht,
wobei vorzugsweise der mindestens eine Satz von ursprünglichen Grafikbefehlen von der oberen Schicht unter den mehreren Schichten zu der unteren Schicht unter den mehreren Schichten gesendet wird und durch den Rendering-Klassifizierer abgefangen wird, um durch die Schattierungsratensteuerung in mindestens einen Satz von neuen Grafikbefehlen umgewandelt zu werden; und/oder
wobei vorzugsweise die mehreren Schichten der Grafiksteuerungsarchitektur mindestens eine Softwareschicht, mindestens eine Firmwareschicht und mindestens eine Hardwareschicht umfassen; und der Rendering-Klassifizierer und die Schattierungsratensteuerung entweder in einer gleichen Schicht oder in verschiedenen Schichten unter den mehreren Schichten implementiert sind.

12. Verfahren nach einem der Ansprüche 1 bis 11, wobei jede Rendering-Eigenschaft unter der mindestens einen Rendering-Eigenschaft eines oder eine Kombination von mindestens einem Pipeline-Zustand, mindestens einer Puffereinstellung, mindestens einer Textureinstellung, mindestens einem Schattierungscode und mindestens einer aktivierten Erweiterung umfasst.

13. Verfahren nach einem der Ansprüche 1 bis 12, wobei die mehreren vorbestimmten Rendering-Typen einen ersten vorbestimmten Rendering-Typ bezüglich des Renderns mindestens eines normalen dreidimensionalen, im Folgenden auch als 3D bezeichnet, -Objekts, einen zweiten vorbestimmten Rendering-Typ bezüglich des Renderns mindestens eines Vegetationsobjekts und mindestens einen anderen vorbestimmten Rendering-Typ bezüglich mindestens einer vorbestimmten Bildverarbeitungsoperation umfassen;
wobei vorzugsweise die mindestens eine vorbestimmte Bildverarbeitungsoperation eine beliebige Operation unter Operationen der Nachverarbeitung, des Renderns visueller Effekte, im Folgenden auch als VFX bezeichnet, des Renderns mindestens einer Benutzerschnittstelle, im Folgenden auch als UI bezeichnet, des Renderns basierend auf einem Tiefenbild und des Renderns mindestens eines geschützten Objekts umfasst.

14. Verfahren nach einem der Ansprüche 1 bis 13, wobei das Rendering entsprechend dem mindestens einen Satz von ursprünglichen Grafikbefehlen eine beliebige Rendering-Operation unter mehreren Rendering-Operationen umfasst, die jeweils mehreren Rendering-Steuerungsebenen entsprechen;
wobei vorzugsweise die mehreren Rendering-Steuerungsebenen eine Drawcall-Ebene, eine Renderpass-Ebene und eine Thread-Process-Ebene umfassen.

15. Vorrichtung, die dafür ausgelegt ist, gemäß dem Verfahren nach einem der Ansprüche 1 bis 14 zu arbeiten, wobei die Vorrichtung mindestens die Verarbeitungsschaltung (103) innerhalb der elektronischen Vorrichtung (100) umfasst.

## Revendications

1. Procédé pour effectuer une commande d'activation automatique concernant un ombrage à taux variable, ci-après également appelé VRS, le procédé étant appliqué à un circuit de traitement à l'intérieur d'un dispositif électronique, le procédé comprenant :
l'utilisation d'un classificateur de rendu à l'intérieur du circuit de traitement pour intercepter au moins un ensemble de commandes graphiques d'origine sur un chemin de commande pour obtenir au moins une propriété de rendu à partir de l'au moins un ensemble de commandes graphiques d'origine, pour classer un rendu correspondant à l'au moins un ensemble de commandes graphiques d'origine (S11) ; et
l'utilisation du classificateur de rendu pour classer le rendu correspondant à l'au moins un ensemble de commandes graphiques d'origine en au moins un type de rendu prédéterminé parmi de multiples types de rendu prédéterminés selon l'au moins une propriété de rendu, afin de déterminer au moins un taux d'ombrage correspondant à l'au moins un type de rendu prédéterminé pour le rendu correspondant à l'au moins un ensemble de commandes graphiques d'origine (S12) ;
l'utilisation d'un contrôleur de taux d'ombrage à l'intérieur du circuit de traitement pour commander le circuit de traitement pour activer sélectivement une fonction VRS du circuit de traitement, pour un rendu à l'au moins un taux d'ombrage correspondant à l'au moins un type de rendu prédéterminé (S13),
**caractérisé en ce que** l'utilisation du contrôleur de taux d'ombrage à l'intérieur du circuit de traitement pour commander le circuit de traitement pour activer sélectivement la fonction VRS du circuit de traitement (S13) comprend :
l'utilisation du classificateur de rendu pour décider dynamiquement s'il faut activer la fonction VRS sur l'au moins un type de rendu prédéterminé selon une connaissance graphique, une règle d'expérience et/ou un indice.

2. Procédé selon la revendication 1, dans lequel la connaissance graphique comprend une stratégie ou une politique qui est utilisée pour effectuer une sélection ou un filtrage sur une propriété de rendu pour identifier un rendu ciblant VRS auquel la fonction VRS doit être appliquée ; et/ou
la règle d'expérience comprend l'évitement de l'utilisation de la fonction VRS lorsqu'une ou plusieurs conditions de propriété de rendu sont remplies ; et/ou
l'indice comprend la commande d'informations ou de paramètre(s) sur l'activation VRS, dans lequel l'indice est de préférence fourni par une interface entre une application, un système et/ou toute autre infrastructure.

3. Procédé selon la revendication 1 ou 2, dans lequel l'utilisation du contrôleur de taux d'ombrage à l'intérieur du circuit de traitement pour commander le circuit de traitement pour activer sélectivement la fonction VRS du circuit de traitement pour un rendu à l'au moins un taux d'ombrage correspondant à l'au moins un type de rendu prédéterminé (S13) comprend en outre :
l'utilisation du contrôleur de taux d'ombrage pour effectuer au moins une opération parmi une opération d'insertion de commande et une opération de modification de commande sur l'au moins un ensemble de commandes graphiques d'origine, afin de convertir l'au moins un ensemble de commandes graphiques d'origine en au moins un ensemble de nouvelles commandes graphiques, pour commander le circuit de traitement pour effectuer un rendu correspondant à l'au moins un ensemble de nouvelles commandes graphiques à l'au moins un taux d'ombrage, plutôt que d'effectuer le rendu correspondant à l'au moins un ensemble de commandes graphiques d'origine.

4. Procédé selon la revendication 3, dans lequel l'au moins un ensemble de commandes graphiques d'origine comprend un premier ensemble de commandes graphiques d'origine et un second ensemble de commandes graphiques d'origine ; le classificateur de rendu est agencé pour intercepter le premier ensemble de commandes graphiques d'origine sur le chemin de commande pour obtenir une première propriété de rendu à partir du premier ensemble de commandes graphiques d'origine, pour classer un rendu correspondant au premier ensemble de commandes graphiques d'origine, et pour intercepter le second ensemble de commandes graphiques d'origine sur le chemin de commande pour obtenir une seconde propriété de rendu à partir du second ensemble de commandes graphiques d'origine, pour classer un rendu correspondant au second ensemble de commandes graphiques d'origine ; le classificateur de rendu est agencé pour classer le rendu correspondant au premier ensemble de commandes graphiques d'origine en un premier type de rendu prédéterminé parmi les multiples types de rendu prédéterminés selon la première propriété de rendu, afin de déterminer un premier taux d'ombrage correspondant au premier type de rendu prédéterminé pour le rendu correspondant au premier ensemble de commandes graphiques d'origine ; et le classificateur de rendu est agencé pour classer le rendu correspondant au second ensemble de commandes graphiques d'origine en un second type de rendu prédéterminé parmi les multiples types de rendu prédéterminés selon la seconde propriété de rendu, afin de déterminer un second taux d'ombrage correspondant au second type de rendu prédéterminé pour le rendu correspondant au second ensemble de commandes graphiques d'origine.

5. Procédé selon la revendication 4, dans lequel le contrôleur de taux d'ombrage est agencé pour effectuer au moins une première opération parmi l'opération d'insertion de commande et l'opération de modification de commande sur le premier ensemble de commandes graphiques d'origine, afin de convertir le premier ensemble de commandes graphiques d'origine en un premier ensemble de nouvelles commandes graphiques parmi l'au moins un ensemble de nouvelles commandes graphiques, pour commander le circuit de traitement pour effectuer un rendu correspondant au premier ensemble de nouvelles commandes graphiques au premier taux d'ombrage, plutôt que d'effectuer le rendu correspondant au premier ensemble de commandes graphiques d'origine ; et le contrôleur de taux d'ombrage est agencé pour effectuer au moins une seconde opération parmi l'opération d'insertion de commande et l'opération de modification de commande sur le second ensemble de commandes graphiques d'origine, afin de convertir le second ensemble de commandes graphiques d'origine en un second ensemble de nouvelles commandes graphiques parmi l'au moins un ensemble de nouvelles commandes graphiques, pour commander le circuit de traitement pour effectuer un rendu correspondant au second ensemble de nouvelles commandes graphiques au second taux d'ombrage, plutôt que d'effectuer le rendu correspondant au second ensemble de commandes graphiques d'origine.

6. Procédé selon l'une quelconque des revendications 1 à 3, dans lequel l'au moins un ensemble de commandes graphiques d'origine comprend un premier ensemble de commandes graphiques d'origine ; le classificateur de rendu est agencé pour intercepter le premier ensemble de commandes graphiques d'origine sur le chemin de commande pour obtenir une première propriété de rendu à partir du premier ensemble de commandes graphiques d'origine, pour classer un rendu correspondant au premier ensemble de commandes graphiques d'origine ; et le classificateur de rendu est agencé pour classer le rendu correspondant au premier ensemble de commandes graphiques d'origine en un premier type de rendu prédéterminé parmi les multiples types de rendu prédéterminés selon la première propriété de rendu, afin de déterminer un premier taux d'ombrage correspondant au premier type de rendu prédéterminé pour le rendu correspondant au premier ensemble de commandes graphiques d'origine.

7. Procédé selon la revendication 6, dans lequel le contrôleur de taux d'ombrage est agencé pour commander le circuit de traitement pour activer la fonction VRS du circuit de traitement, pour un rendu au premier taux d'ombrage correspondant au premier type de rendu prédéterminé.

8. Procédé selon la revendication 6 ou 7, dans lequel l'au moins un ensemble de commandes graphiques d'origine comprend en outre un second ensemble de commandes graphiques d'origine ; le classificateur de rendu est agencé pour intercepter le second ensemble de commandes graphiques d'origine sur le chemin de commande pour obtenir une seconde propriété de rendu à partir du second ensemble de commandes graphiques d'origine, pour classer un rendu correspondant au second ensemble de commandes graphiques d'origine ; et le classificateur de rendu est agencé pour classer le rendu correspondant au second ensemble de commandes graphiques d'origine en un second type de rendu prédéterminé parmi les multiples types de rendu prédéterminés selon la seconde propriété de rendu, afin de déterminer un second taux d'ombrage correspondant au second type de rendu prédéterminé pour le rendu correspondant au second ensemble de commandes graphiques d'origine.

9. Procédé selon la revendication 8, dans lequel le contrôleur de taux d'ombrage est agencé pour commander le circuit de traitement pour activer la fonction VRS du circuit de traitement, pour un rendu au second taux d'ombrage correspondant au second type de rendu prédéterminé.

10. Procédé selon l'une quelconque des revendications 6 à 9, dans lequel l'au moins un ensemble de commandes graphiques d'origine comprend en outre un autre ensemble de commandes graphiques d'origine ; le classificateur de rendu est agencé pour intercepter l'autre ensemble de commandes graphiques d'origine sur le chemin de commande pour obtenir une autre propriété de rendu à partir de l'autre ensemble de commandes graphiques d'origine, pour classer un rendu correspondant à l'autre ensemble de commandes graphiques d'origine ; et le classificateur de rendu est agencé pour classer le rendu correspondant à l'autre ensemble de commandes graphiques d'origine en un autre type de rendu prédéterminé parmi les multiples types de rendu prédéterminés selon l'autre propriété de rendu, afin de déterminer un autre taux d'ombrage correspondant à l'autre type de rendu prédéterminé pour le rendu correspondant à l'autre ensemble de commandes graphiques d'origine, dans lequel l'autre taux d'ombrage est égal à un taux d'ombrage par défaut du circuit de traitement ; dans lequel de préférence le contrôleur de taux d'ombrage est agencé pour commander le circuit de traitement pour désactiver la fonction VRS du circuit de traitement, pour un rendu à l'autre taux d'ombrage correspondant à l'autre type de rendu prédéterminé.

11. Procédé selon l'une quelconque des revendications 1 à 10, dans lequel le chemin de commande commence à partir d'une couche supérieure parmi de multiples couches d'une architecture de commande graphique à l'intérieur du circuit de traitement et atteint une couche inférieure parmi les multiples couches,
dans lequel de préférence l'au moins un ensemble de commandes graphiques d'origine est envoyé à partir de la couche supérieure parmi les multiples couches vers la couche inférieure parmi les multiples couches, et est intercepté par le classificateur de rendu, pour être converti en au moins un ensemble de nouvelles commandes graphiques par le contrôleur de taux d'ombrage ; et/ou
dans lequel de préférence les multiples couches de l'architecture de commande graphique comprennent au moins une couche logicielle, au moins une couche de micrologiciel et au moins une couche matérielle ; et le classificateur de rendu et le contrôleur de taux d'ombrage sont mis en oeuvre soit dans une même couche, soit dans des couches différentes parmi les multiples couches.

12. Procédé selon l'une quelconque des revendications 1 à 11, dans lequel toute propriété de rendu parmi l'au moins une propriété de rendu comprend un ou une combinaison d'au moins un état de pipeline, d'au moins un réglage de mémoire tampon, d'au moins un réglage de texture, d'au moins un code de nuanceur et d'au moins une extension activée.

13. Procédé selon l'une quelconque des revendications 1 à 12, dans lequel les multiples types de rendu prédéterminés comprennent un premier type de rendu prédéterminé concernant un rendu d'au moins un objet tridimensionnel, ci-après également appelé 3D, normal, un second type de rendu prédéterminé concernant un rendu d'au moins un objet de végétation, et au moins un autre type de rendu prédéterminé concernant au moins une opération de traitement d'image prédéterminée ;
dans lequel de préférence l'au moins une opération de traitement d'image prédéterminée comprend toute opération parmi des opérations de post-traitement, de rendu d'effets visuels, ci-après également appelés VFX, de rendu d'au moins une interface utilisateur, ci-après également appelée UI, de rendu sur la base d'une image de profondeur et de rendu d'au moins un objet protégé.

14. Procédé selon l'une quelconque des revendications 1 à 13, dans lequel le rendu correspondant à l'au moins un ensemble de commandes graphiques d'origine comprend toute opération de rendu parmi de multiples opérations de rendu correspondant respectivement à de multiples niveaux de commande de rendu ;
dans lequel de préférence les multiples niveaux de commande de rendu comprennent un niveau d'appel de tirage, un niveau de passe de rendu et un niveau de processus de fil d'exécution.

15. Appareil qui est adapté pour fonctionner selon le procédé de l'une quelconque des revendications 1 à 14, dans lequel l'appareil comprend au moins le circuit de traitement (103) à l'intérieur du dispositif électronique (100).
